# EUROPÄISCHE PATENTSCHRIFT

(11) **EP 1 954 073 B1**
(45) Veröffentlichungstag und Bekanntmachung des Hinweises auf die Patenterteilung: **25.02.2015**
(21) Anmeldenummer: 08007964.3
(22) Anmeldetag: 30.04.2003
(51) Int. Cl.: H04W 4/08, H04W 8/18

(54) **Verfahren zur Übertragung mindestens einer Gruppennachricht, zugehöriges Funkkommunikations-Netzwerk, Subsystem sowie Mobilfunkgerät**
Method for transmitting at least one group message, accompanying radio communication network, subsystem and mobile phone device
Procédé de transmission d'au moins une information de groupe, réseau de communication radio correspondant, sous-système et appareil radio mobile

(30) Priorität: 06.05.2002 DE 10220184
(43) Veröffentlichungstag der Anmeldung: 06.08.2008
(62) Teilanmeldung aus: 03747396.4
(73) Patentinhaber: Siemens Aktiengesellschaft, 80333 München (DE)
(72) Erfinder: Beckmann, Mark, 38124 Braunschweig (DE); Eckert, Michael, 38122 Braunschweig (DE); Mademann, Frank, Dr., 13189 Berlin (DE)

(56) Entgegenhaltungen:
- WO-A-01/39443
- WO-A-01/43479
- WO-A-98/25422
- US-A- 5 530 914
- US-A- 5 640 443
- "3rd Generation Partnership Project;Technical Specification Group Services and System Aspects; Multimedia Broadcast/Multicast Service; Architecture and Functional Description (Release 5) (3GPP TR 23.846 0.3.0)" 3GPP TR 23.846 0.3.0, XX, XX, 2. April 2002 (2002-04-02), Seiten 1-22, XP002231206
- ETSI: "Universal Mobile Telecommunications System (UMTS); Multimedia Broadcast/Multicast Service (MBMS); Stage 1 (3GPP TS 22.146 version 5.2.0 Release 5)" ETSI TS 122 146 V5.2.0 (2002-03), März 2002 (2002-03), Seiten 1-15, XP002255069 France

## Beschreibung

Aus der WO 98/25422 ist eine Methode und Vorrichtung bekannt, bei der/dem Gruppennachrichten in einem paket-orientierten Funknetzwerk übertragen werden, mit mindestens einem Unterstützungsknoten (support node), einer Mehrzahl von Gruppenteilnehmern, und mindestens einem vorgegebenen Gebiet (defined area).

Aus der US 5,640,443 ist ein mobiles Telefonsystem bekannt, das eine Telefonkommunikation mit einer Gruppe ausführt, mit mobilen Teilnehmern zum Verbessern der Rate an eingehenden Anrufen und der Kommunikationsqualität, mit einer Vielzahl an mobilen Teilnehmern, wobei jeder Information verschickt, die eine Aufenthaltsnummer und die Teilnehmernummer umfassen.

Aus der WO 0/139443 ist ein Drahtloskommunikationssystem bekannt, bei dem Informationen zu einer Vielzahl von Teilnehmern übertragen werden, wobei die Teilnehmer in einer Gruppe zusammengefasst sind und Gruppennachrichten zugeführt werden können und wobei im Falle das eine der Teilnehmer der Gruppe eine Nachricht nicht als empfangen quittiert, diese Nachricht erneut durch Infrastruktureinrichtungen des Drahtloskommunikationssystems mittels einer Punkt-zu-Punkt Übertragung an den betreffenden Teilnehmer übermittelt wird.

Der Erfindung liegt die Aufgabe zu Grunde, einen Weg aufzuzeigen, wie in einem Funkkommunikations- Netzwerk mindestens eine Gruppennachricht zu ein oder mehreren Teilnehmergeräten mindestens einer Gruppe in möglichst effektiver Weise übertragen werden kann.

Diese Aufgabe wird mit den Merkmalen des Anspruchs 1 gelöst.

Die Erfindung betrifft auch ein Funkkommunikations-Netzwerk gemäß Anspruch 12, ein zugehöriges Subsystem nach Anspruch 13 sowie ein Funkkommunikationsgerät nach Anspruch 14.

Die Erfindung und ihre Weiterbildungen werden nachfolgend anhand von Zeichnungen näher erläutert.

Es zeigen:
- Figur 1: in schematischer Darstellung Netzwerkelemente und ihre Verknüpfung im UTRAN- Subsystem von UMTS (universal mobile telecommunication system),
- Figuren 2, 3: jeweils in schematischer Darstellung ein MBMS-Kontext im UTRAN- Subsystem von Figur 1, der von mindestens einer übergeordneten Funknetzwerk-Kontrolleineheit dieses Subsystems nach dem erfindungsgemäßen Verfahren verwaltet wird, und
- Figuren 4 mit 6: jeweils in schematischer Darstellung zur Durchführung des erfindungsgemäßen Verfahrens die Signalisierung auf der Luftschnittstelle zwischen dem jeweiligen Teilnehmergerät und der übergeordneten Funknetzwerk-Kontrolleinheit im UTRAN-Subsystem von UMTS nach Figur 1.

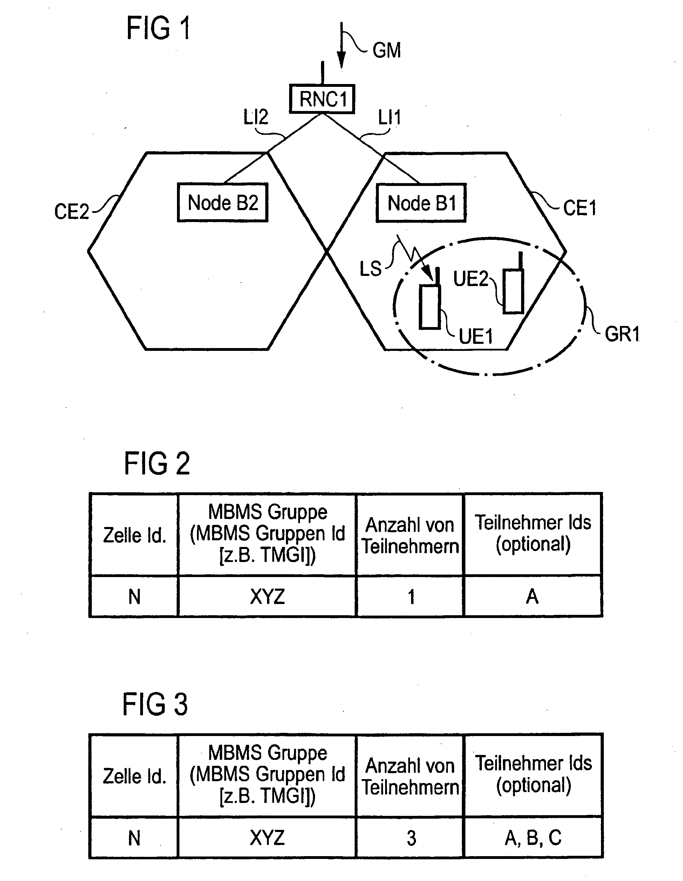

Elemente mit gleicher Funktion und Wirkungsweise sind in den Figuren 1 mit 6 jeweils mit denselben Bezugszeichen versehen.

Bei vielen, in modernen Mobilfunksystemen angebotenen Diensten und Anwendungen sollen Nachrichten nicht nur zu einem, sondern zu zwei und mehreren Mobilfunkteilnehmern mindestens einer vorgebbaren Gruppe übertragen werden. Beispiele für solche Dienste und Anwendungen sind News-Groups, Video-Konferenzen, Video-On-Demand, verteilte Anwendungen usw.

Bei der Übertragung der Nachrichten zu den verschiedenen Teilnehmern ist es möglich, jedem Empfänger separat eine Kopie der Daten zuzusenden. Diese Technik ist zwar einfach zu implementieren, für große Gruppen jedoch ungeeignet. Da dieselbe Nachricht über N (N=Anzahl der Empfänger der Nachricht) Einzelverbindungen (Unicast-Verbindungen) übertragen wird und dabei mehrfach über gemeinsame Verbindungswege gesendet wird, benötigt dieses Verfahren eine sehr hohe Bandbreite.

Eine bessere Möglichkeit bietet die sogenannte Multicast-Übertragung. Hierbei werden die verschiedenen Teilnehmer, denen dieselbe Nachricht übermittelt werden soll, zu einer Gruppe (Multicast-Gruppe) zusammengefasst und dieser eine Adresse (Multicast-Adresse) zugeordnet. Die zu übertragenden Daten werden daraufhin nur einmal an diese Multicast-Adresse gesendet. Über gemeinsame Verbindungswege vom Sender zu den Empfängern wird die Multicast (=MC)-Nachricht im Idealfall nur einmal gesendet. Für den Sender ist es nicht erforderlich, zu wissen, wo und wie viele Empfänger sich hinter der jeweiligen Multicast Adresse verbergen. Um Nachrichten einer bestimmten Multicast Gruppen empfangen zu können, muss sich ein Teilnehmer zu dieser Multicastgruppe einschreiben.

Beim Broadcast werden Mitteilungen an eine Gruppe von Teilnehmern innerhalb eines regionalen Gebietes versendet. Das Gebiet, in der die Broadcast-Nachrichten ausgesendet werden, wird als sogenannte Broadcast Area (Broadcast Gebiet) bezeichnet. Die Größe der Broadcast Area wird vom Netzbetreiber bestimmt. Über gemeinsame Verbindungswege wird die Nachricht dabei im Idealfall, wie auch beim Multicast, nur einmal gesendet. Nachteilig ist hierbei jedoch, dass alle Teilnehmer innerhalb der Broadcast Area die Möglichkeit haben, Broadcast-Nachrichten zu lesen, und zwar selbst dann, wenn sie nicht berechtigt sind. Um nur bestimmte Nachrichten zu lesen und andere zu verwerfen bzw. zu filtern, können Teilnehmer an ihren Endgeräten entsprechende Einstellungen vornehmen. Eine explizite Einschreibung zu einem Broadcast Service ist nicht erforderlich.

In den Spezifikationen der dritten Generation von Mobilfunksystemen, insbesondere zum UMTS- Mobilfunksystem (universal mobile telecommunication), wird der sog. Multimedia Broadcast und Multicast Service (MBMS) (service = Dienst) beschrieben. Dieser ermöglicht die Übertragung von Multimedia-Daten über Multicast und über Broadcast.

Im folgenden werden als Subsystem des UMTS-Funkkommunikationsnetzwerks lediglich die Netzwerkelemente des UMTS Zugangsnetzwerkes, des sogenannten UMTS Terrestrial Radio Access Network's (UTRAN), näher betrachtet. In der Figur 1 sind von dessen Netzwerkelementen folgende Komponenten und deren Verbindung zueinander beispielhaft schematisch dargestellt:
NodeB:
   Eine NodeB (Basisstation), hier die beiden Basisstationen NodeB1, NodeB2, ist eine Netzwerkkomponente, die für die Versorgung einer bzw. mehrerer Funkzellen über mindestens eine Luftschnittstelle zuständig ist. Mit Hilfe der jeweiligen NodeB erfolgt die Kommunikation zwischen dem Festnetzteil bzw. übergeordneten Funknetzteil des UMTS-Mobilfunksystems und den Teilnehmergeräten, insbesondere Mobilfunkgeräten, die sich in der die Basisstation umgebenden Funkzelle befinden, über mindestens eine Luftschnittstelle.
Radio Network Controller (abgekürzt: RNC) = Funknetzwerk-Kontrolleinheit:
   Ein RNC kontrolliert die Ressourcen der Luftschnittstelle und versorgt und kontrolliert eine oder mehrere Basisstationen (NodeB's).
User Equipment (UE)= Teilnehmergerät;
   Das UE (Abkürzung für User Equipment) ist insbesondere ein mobiles Endgerät, das über die Luftschnittstelle mit dem UTRAN verbunden ist.

In der Figur 1 werden beispielhaft die beiden Basisstationen NodeB1, NodeB2 sowie ihre zugehörigen Funkzellen CE1, CE2 von der übergeordneten Funknetzwerk-Kontrolleinheit RNC1 kontrolliert. Die Basisstation NodeB1 ist dabei über eine Festleitung LI1, die Basisstation NodeB2 über eine Festleitung LI2 mit der gemeinsam zugeordneten Funknetzwerk-Kontrolleinheit RNC1 verbunden. In der Funkzelle CE1 der Basisstation NodeB1 halten sich die drei Teilnehmergeräte UE1, UE2, UE3 auf, die zur Gruppe GR1 eingeschrieben und angemeldet sind. Sie kommunizieren über die Luftschnittstelle LS1 mit der Basisstation NodeB1 sowie der daran angekoppelten Kontrolleinheit RNC1.

In den MBMS Spezifikationen ist festgelegt, dass die Daten eines MBMS Services nur in den Funkzellen ausgesendet werden sollen, in denen sich auch tatsächlich Teilnehmergeräte bzw. UEs befinden, die diesen Service empfangen möchten. Um dies realisieren zu können, benötigt das UTRAN, insbesondere der RNC, Kenntnis bzw. Information darüber, ob sich Teilnehmer bzw. UEs, die einen bestimmten MBMS Service empfangen möchten, in einer der Funkzellen befinden, für die er zuständig ist. Diese Information hat UTRAN, insbesondere der RNC, nach dem Stand der Technik nicht. Außerdem ist festgelegt, dass ein Teilnehmergerät (=UE) MBMS auch im sogenannten ,Idle mode' empfangen können soll. In diesem Zustand (Idle mode) hat das UTRAN keine Kenntnis über das UE, d.h. es weiß nicht einmal, dass es sich überhaupt in einer seiner Funkzellen befindet.

UTRAN kann daher nach dem Stand der Technik keine Entscheidung treffen, ob MBMS -Daten in Funkzellen gesendet werden sollen, selbst wenn sich dort UEs befinden, die den Service empfangen möchten.

Für dieses Ausführungsbeispiel wird eine Funkzelle (Zell- ID = N; Zell-Id= Zell-Identität) wie z.B. CE1 betrachtet, die von einer NodeB wie z.B. NOdeB1 und einem RNC wie z.B. RNC1 versorgt wird. Des weiteren wird ein MBMS Service (MBMS Gruppen Id = XYZ) betrachtet.

Es wird nun als erstes gezeigt, wie in vorteilhafter Weise ein MBMS Kontext im UTRAN, insbesondere im RNC, ausgebildet und eingeführt werden kann. Dies wird anhand von zwei Beispielen gezeigt.

### Beispiel 1:

Es befindet sich in der Funkzelle CE1 mit der Zellen Id ,N=1' 1 (ein) Teilnehmer mit der UE Id ,A' [dieses Informationselement ist optional ], der den MBMS Service mit der MBMS Service Id ,XYZ' empfangen möchte. In Figur 2 ist dieser MBMS Kontext beispielhaft dargestellt.

### Beispiel 2:

Es sein angenommen, dass sich nun in der Funkzelle CE1 mit der Zellen Id ,N=1' 3 UEs UE1, UE2, UE3 mit den UE Ids ,A', ,B' und ,C' befinden [dieses Informationselement ist optional !], die den MBMS Service mit der MBMS Service Id XYZ' empfangen möchten. In Figur 3 ist dieser MBMS Kontext beispielhaft dargestellt.

Wenn sich keine Teilnehmer in der betrachten Funkzelle CE1 befinden, die den betrachteten MBMS Service empfangen möchten, wird für diesen MBMS Service in dieser Funkzelle kein MBMS Kontext im RNC verwaltet bzw. gepflegt.

Es wird nun als zweites gezeigt werden, wie eine vorteilhafte Signalisierung zwischen UE und RNC aussieht, aufgrund derer der MBMS Kontext im RNC aufgebaut, angepasst, und/oder abgebaut wird.

Dafür sei angenommen, dass sich noch kein UE in der betrachten Funkzelle wie z.B. CE1 befindet, das den MBMS Service ,XYZ' empfangen möchte. Es wird daher für diesen MBMS Service und diese Funkzelle kein MBMS Kontext im RNC gepflegt. Es sei dabei weiterhin angenommen, dass ein UE wie z.B. UE1 mit der UE Id ,A' in die betrachtete Funkzelle CE1 mit der Zellen- Id ,N=1' wechselt und bereits zum betrachteten MBMS Service mit der MBMS Service Id. ,XYZ' subskribiert ist. Auf Grund von Messungen erkennt das UE =UE1 nun, dass es sich in einer neuen Zelle befindet. Erfindungsgemäß sendet das Teilnehmergerät UE1 nun ein Informationssignal IS1 ("MBMS notification") an die übergeordnete Funknetzwerk-Kontrolleinheit (= RNC) RNC1. Diese MBMS notification enthält die MBMS Gruppen- Id, zu der das Teilnehmergerät UE1 eingeschrieben ist (z.B. die TMGI(="temporary mobile group identifier" = Akronym für "zeitweiliger Gruppen-Identifizierer") und optional eine Information über seine Identität (UE Id).

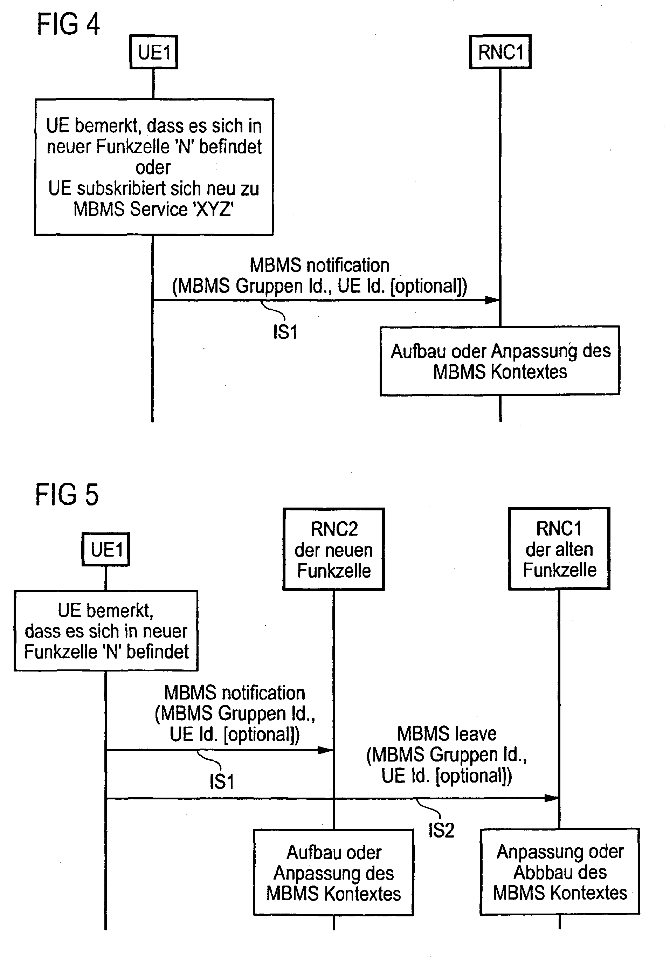

Der RNC, hier RNC1, baut nun den erfindungsgemäßen MBMS Kontext auf. Dieser sieht in diesem Fall wie im obigen Beispiel 1 aus. Die gleiche "MBMS notification" IS1 sendet das Teilnehmergerät (=UE) auch an den RNC, wenn sich das UE bereits in der betrachteten Funkzelle befindet und sich neu zu dem betrachteten MBMS Service subskribiert, d.h. einschreibt und somit in der jeweiligen Gruppe "on line", d.h. aktiv eingeschaltet ist. Dieses Signalisierungs-Szenario ist in der Figur 4 dargestellt.

Das Senden des Informationssignals IS1 ("MBMS notification") erfolgt jetzt von jedem UE zur übergeordneten Funknetzwerk-Kontrolleinheit, hier RNC1, das in die betrachtete Funkzelle wechselt und zu dem betrachteten MBMS Service eingeschrieben ist, und für jedes UE, das sich bereits in der betrachteten Funkzelle befindet und sich zum betrachteten MBMS Service subskribiert. Der MBMS Kontext im RNC für diese Funkzelle und diesen MBMS Service wird dann entsprechend angepasst.

Ggf. können solche Hinweis- bzw. Informationselemente wie z.B. MBMS Gruppen Id, UE-Id optional auch in bereits nach dem Stand der Technik vorhandene Nachrichten integriert und an den zuständigen RNC geschickt werden.

Verlässt ein UE die betrachtete Funkzelle, so sendet es zweckmäßigerweise in der neuen Funkzelle erneut eine MBMS notification wie z.B. IS1 an den verantwortlichen RNC wie z.B. RNC1, der daraufhin einen entsprechenden MBMS Kontext für die neue Funkzelle und den MBMS Service verwaltet bzw. pflegt. Zusätzlich oder unabhängig hiervon übermittelt dieses, die Funkzellen wechselnde UE zweckmäßigerweise in der alten Funkzelle, also in der Funkzelle, die das UE gerade verlässt, ein weiteres Informationssignal wie z.B. IS2 (,MBMS leave' (engl. leave = verlassen)), d.h. einen Hinweis bzw. eine Nachricht, an den zuständigen RNC, damit dieser weiß, dass sich nun ein UE, das den betrachteten MBMS Service empfangen möchte, weniger in der betrachteten Funkzelle befindet. Die "MBMS leave Nachricht" enthält zweckmäßigerweise die Informationselemente MBMS Gruppen- Id (z.B. die TMGI) und optional die UE- Id des Teilnehmergeräts (=UE), das die "MBMS leave Nachricht" sendet. Der RNC passt daraufhin zweckmäßigerweise den MBMS Kontext für diese Funkzelle und diesen MBMS Service entsprechend an. Dieses Signalisierungs-Szenario ist in der Figur 5 dargestellt. Dort ist das Informations- bzw. Hinweissignal der "MBMS leave Nachricht", das vom Teilnehmergerät UE1 zur zuständigen, übergeordneten Funknetzwerk-Kontrolleinheit RNC1 beim Verlassen der Funkzelle CE1 gesendet wird, mit IS2 bezeichnet.

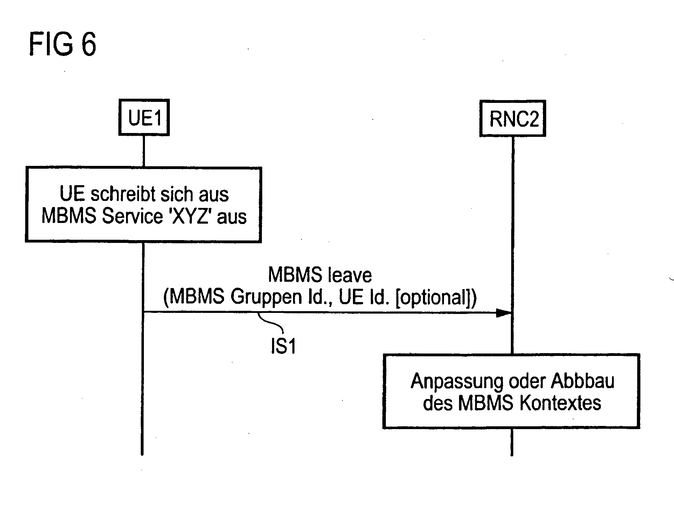

Diese "MBMS leave Nachricht" IS2 wird zweckmäßigerweise auch gesendet, wenn das UE in der betrachteten Funkzelle bleibt und sich von dem betrachteten MBMS Service ausschreibt. Dieses Signalisierungs-Szenario ist in der Figur 6 dargestellt.

Ggf. können die Informationselemente wie z.B. MBMS Gruppen Id, UE-Id optional auch in bereits nach dem Stand der Technik vorhandene Nachrichten integriert und an den RNC geschickt werden.

Hat das letzte UE, das Daten des jeweiligen MBMS Services empfangen möchte, die jeweilige Funkzelle verlassen bzw. sich von dem jeweiligen MBMS Service ausgeschrieben und eine entsprechende "MBMS leave Nachricht" an den RNC geschickt, baut dieser den MBMS Kontext für diese Funkzelle und diesen MBMS Service ab bzw. löscht diesen.

Allgemein betrachtet wird also in vorteilhafter Weise ein MBMS Kontext im UTRAN eingeführt, der pro Funkzelle beschreibt, ob bzw. wie viele Teilnehmer sich zu einer MBMS Gruppe (z.B. beschrieben durch eine MBMS Gruppen Identität) eingeschrieben haben. Der MBMS Kontext wird im UTRAN, insbesondere dem RNC gepflegt, verwaltet und modifiziert. Durch den MBMS Kontext wird erreicht, dass das UTRAN Kenntnis darüber hat, ob und wie viele UEs, die zu einem bestimmten MBMS Service eingeschrieben sind, sich in den Funkzellen befinden, die von ihm verwaltet werden. Aufgrund dieser Information kann das UTRAN-Subsystem, insbesondere der RNC, die Entscheidung treffen, ob MBMS Daten in eine Funkzelle gesendet werden oder nicht. Des weiteren kann UTRAN auf Grundlage des MBMS Kontextes ggf. die Entscheidung treffen, ob bei einer geringen Anzahl von Teilnehmern Punkt-zu-Punkt Übertragung (jeder Teilnehmer erhält seine Daten über ihm zugeordnete Verbindungen) oder Punkt-zu-Mehrpunkt Übertragung (die Teilnehmer erhalten ihre Daten über eine gemeinsame Verbindung) durchgeführt werden soll.

Optional enthält der MBMS Kontext im UTRAN zusätzlich noch die Information, welche UEs (insbesondere welche UE Identitäten) sich in einer MBMS Gruppe befinden. Diese Information kann bspw. dazu genutzt werden, wenn das UTRAN bei einer geringen Anzahl von Empfängern die Entscheidung trifft, Punkt-zu-Punkt Übertragungen für die Übertragung von MBMS Daten zu nutzen. Die UE Identitäten werden dann für den Aufbau der teilnehmerspezifischen Punkt-zu-Punkt Verbindungen genutzt.

Der MBMS Service-spezifische und Funkzell-spezifische MBMS Kontext wird vorzugsweise in der jeweilig zuständigen, übergeordneten Funknetzwerk-Kontrolleinheit aufgebaut, sobald das erste UE in der Funkzelle einen MBMS Service empfangen möchte. Der MBMS Kontext wird dort in der Kontrolleinheit modifiziert bzw. angepasst, sobald sich neue Teilnehmergeräte (UEs) in der Funkzelle befinden, die denselben MBMS Service empfangen möchten bzw. wenn UEs die Funkzelle verlassen oder den Service nicht mehr empfangen möchten. Der MBMS Kontext wird zweckmäßigerweise abgebaut, sobald sich kein UE mehr in der Funkzelle befindet, das den speziellen MBMS Service empfangen möchte.

Sobald sich ein neues UE in einer Funkzelle befindet, sendet es eine Benachrichtigung, im Folgenden als ,MBMS notification' bezeichnet, an das UTRAN, insbesondere an den RNC. Diese MBMS notification enthält vorzugsweise wenigstens die MBMS Gruppen Identität (z.B. die TMGI [Temporary Mobil Group Identity]) bzw. mehrere Identitäten (wenn UE zu mehreren MBMS Services eingeschrieben ist), die einen MBMS Service eindeutig identifizieren. Optional kann die "MBMS notification" zusätzlich noch die UE Identität des UEs, das die Nachricht gesendet hat, enthalten.

Das jeweilige UE sendet die "MBMS notification" an die zuständige, übergeordnete Funknetzwerk-Kontrolleinheit (RNC), insbesondere wenn es:
- sich in einer Funkzelle befindet und sich zu einem neuen MBMS Service subskribiert, und /oder
- sich von einer Funkzelle in eine neue Funkzelle bewegt. UE erkennt dabei, bspw. aufgrund von Messungen, dass es sich in einer neuen Funkzelle befindet und sendet automatisch eine MBMS notification an das UTRAN.

Damit UTRAN den MBMS Kontext anpassen kann, wenn UEs die Funkzelle verlassen, sich ausschalten, und/oder sich von dem betrachteten MBMS Service ausschreiben, übermittelt das jeweilige UE in diesen Fällen zweckmäßigerweise eine Nachricht an das UTRAN, damit UTRAN weiß, dass sich nun ein UE weniger in dieser Funkzelle befindet. Beim verlassen der ,alten' Funkzelle wird also eine Nachricht in der ,alten' Zelle an die dortige Basisstation mit der zugeordneten Kontrolleinheit gesendet, dass dort nun ein UE weniger vorhanden ist, und eine Nachricht in der ,neuen' Zelle an die dortige Basistation mit der ihr zugeordneten Kontrolleinheit, dass dort nun ein UE mehr vorhanden ist, das einen bestimmten MBMS Service empfangen möchte. Diese Nachricht wird im Rahmen der Erfindung als "MBMS leave Nachricht" bezeichnet. Diese "MBMS leave Nachricht" enthält vorzugsweise die MBMS Gruppen Identität (z.B. die TMGI [Temporary Mobil Group Identity]) oder ggf. mehrere Identitäten (wenn das jeweilige UE zu mehreren MBMS Services eingeschrieben ist), die einen MBMS Service eindeutig identifizieren. Optional kann die "MBMS leave Nachricht" zusätzlich noch die UE Identität des UEs, das die Nachricht gesendet hat, enthalten.

Im Rahmen der Erfindung sind folgende Abkürzungen und Begriffe verwendet worden, die insbesondere in der Mobilfunktechnik als Akronyme und ggf. Definitionen standardmäßig eingeführt oder üblich sind:
- Id: Identität (z.B. UE Id beschreibt UE eindeutig)
- MBMS: Multimedia Broadcast / Multicast Service
- NodeB: Basisstation im UMTS
- RNC: Radio Network Controller (Funknetz Kontrolleinheit)
- TMGI: Temporary Mobile Group Id (identifiziert die MBMS Gruppe eindeutig)
- UE: User Equipment (Mobilfunkgerät im UMTS Netzwerk)
- UMTS: Universal Mobile Telecommunication System
- UTRAN: UMTS Terrestrial Radio Access Network

Auf diese Weise ist ein Subsystem für ein Funkkommunikations-Netzwerk zur Übertragung von mindestens einer Gruppennachricht an mindestens ein empfangendes Teilnehmergerät bereitgestellt. Diese Subsystem des Funkkommunikations-Netzwerk ist durch mindestens ein Teilnehmergerät sowie mindestens eine übergeordnete Funknetzwerk-Kontrolleinheit gebildet, die zur Durchführung des erfindungsgemäßen Verfahrens ausgebildet sind.

## Patentansprüche

1. Verfahren für ein UMTS Mobilfunknetz zur Übertragung von mindestens einer Gruppennachricht (GM) an mindestens eine Gruppe (GR1) von ein oder mehreren Teilnehmergeräten (UE1) in mindestens einer Funkzelle (CE1) eines UMTS Funkkommunikationsnetzwerks,
wobei von mindestens einem übergeordneten Radio Network Controller (RNC1) die Basisstation (NodeB1) jeder Funkzelle gesteuert wird,
**dadurch gekennzeichnet,**
**dass** von dem übergeordneten Radio Network Controller (RNC1) eigens kontrolliert wird, ob und/oder wie viele Teilnehmergeräte (UE1, UE2) pro Funkzelle (CE1) zur jeweiligen Gruppe (GR1) aktuell eingeschrieben sind und
**dass** die Gruppennachricht (GM) einmal mittels einer Multicast-Übertragung an die Gruppe (GR1) in der Funkzelle (CE1) übertragen wird.

2. Verfahren nach Anspruch 1,
**dadurch gekennzeichnet,**
**dass** vom jeweiligen Teilnehmergerät (UE1) über die Luftschnittstelle (LS1) der Basisstation (NodeB1) seiner jeweilig momentanen Aufenthaltsfunkzelle (CE1) an den übergeordneten Radio Network Controller (RNC1) mindestens ein erstes Informationssignal (IS1) übertragen wird, mit dem dieser angezeigt wird, ob das Teilnehmergerät (UE1) zur jeweiligen Gruppe (GR1) aktuell eingeschrieben ist.

3. Verfahren nach einem der vorhergehenden Ansprüche
**dadurch gekennzeichnet,**
**dass** vom jeweiligen Teilnehmergerät (UE1) über die Luftschnittstelle (LS1) der Basisstation (NodeB1) seiner jeweilig momentanen Aufenthaltsfunkzelle (CE1) an den übergeordneten Radio Network Controller (RNC1) mindestens ein zweites Informationssignal (IS2) übertragen wird, mit dem dieser angezeigt wird, ob es sich aus der jeweiligen Gruppe (GR1) austragen lässt, seine Aufenthaltsfunkzelle (CE1) verlässt, und/oder sich ausschaltet.

4. Verfahren nach einem der Ansprüche 2 oder 3,
**dadurch gekennzeichnet,**
**dass** das Informationssignal (IS1, IS2) bei der Multicast-Übertragung von UMTS (Universal Mobile Telecommunication Service) generiert wird.

5. Verfahren nach einem der vorhergehenden Ansprüche
**dadurch gekennzeichnet,**
**dass** als Teilnehmergerät (UE1) ein Funkkommunikationsgerät, insbesondere Mobilfunkgerät, verwendet wird.

6. Verfahren nach einem der vorhergehenden Ansprüche
**dadurch gekennzeichnet,**
**dass** als Funkkommunikationsnetzwerk ein UMTS Terrestrial Radio Access Network, kurz UTRAN, verwendet wird.

7. Verfahren nach einem der vorhergehenden Ansprüche
**dadurch gekennzeichnet,**
**dass** als Basisstation (NodeB1) ein NodeB eines UMTS-Mobilfunknetzes verwendet wird.

8. Verfahren nach dem Anspruch 2
**dadurch gekennzeichnet,**
wobei dem ersten Informationssignal (IS1) keine Teilnehmer-ID (UE-ID) hinzugefügt wird.

9. Verfahren nach dem Anspruch 3
**dadurch gekennzeichnet,**
**dass** dem zweiten Informationssignal (IS2) keine Teilnehmer-ID (UE-ID)hinzugefügt wird.

10. Verfahren nach einem der vorhergehenden Ansprüche 8 oder 9,
**dadurch gekennzeichnet,**
**dass** einem der beiden Informationssignale (IS1, IS2) eine Teilnehmer-ID (UE-ID) hinzugefügt wird.

11. Verfahren nach einem der vorhergehenden Ansprüche
**dadurch gekennzeichnet,**
**dass** das Verfahren bei der dritten Generation von Mobilfunksystemen verwendet wird.

12. UMTS-Funkkommunikations-Netzwerk, aufweisend einen Radio Network Controller (RNC1) der mit mindestens einer Basisstation (NodeB1) einer Funkzelle verbunden ist,
**dadurch gekennzeichnet,**
**dass** das UMTS-Funkkommunikations-Netzwerk derart ausgebildet ist, dass mindestens eine Gruppennachricht (GM) gemäß einem der Verfahrensansprüche 1 bis 11 übertragbar ist.

13. Subsystem des UMTS-Funkkommunikations-Netzwerk nach Anspruch 12, das mindestens ein Teilnehmergerät (UE1) sowie mindestens einen zugehörigen, übergeordneten Radio Network Controller (RNC1) aufweist, die zur Übertragung mindestens einer Gruppennachricht (GM) nach einem der Ansprüche 1 mit 11 ausgebildet ist.

14. UMTS-Funkkommunikationsgerät (UE1), insbesondere Mobilfunkgerät, das derart ausgebildet ist, dass mindestens ein Informationssignal (IS1) nach einem der Ansprüche 2 bis 11 an den übergeordneten Radio Network Controller (RNC1) übertragbar ist.

## Claims

1. Method for a UMTS mobile radio network for transmitting at least one group message (GM) to at least one group (GR1) of one or more subscriber devices (UE1) in at least one radio cell (CE1) of a UMTS radio communication network,
the base station (NodeB1) of each radio cell being controlled by at least one higher-order radio network controller (RNC1), **characterised in that**
the higher-order radio network controller (RNC1) specifically monitors whether and/or how many subscriber devices (UE1, UE2) in each radio cell (CE1) are currently subscribed to the relevant group (GR1), and that the group message (GM) is transmitted once by means of a multicast transmission to the group (GR1) in the radio cell (CE1).

2. Method according to claim 1,
**characterised in that**
at least one first information signal (IS1) indicating to the controller whether the subscriber device (UE1) is currently subscribed to the relevant group (GR1) is transmitted by the relevant subscriber device (UE1) via the air interface (LS1) of the base station (NodeB1) of its present location cell (CE1) to the higher-order radio network controller (RNC1).

3. Method according to one of the preceding claims,
**characterised in that**
at least one second information signal (IS2) indicating to the controller whether said subscriber device can be unsubscribed from the relevant group (GR1), is leaving its present location cell (CE1), and/or is switching off, is transmitted by the relevant subscriber device (UE1) via the air interface (LS1) of the base station (NodeB1) of its present location cell (CE1) to the higher-order radio network controller (RNC1).

4. Method according to one of claims 2 or 3,
**characterised in that**
the information signal (IS1, IS2) is generated by the UMTS (Universal Mobile Telecommunication Service) in the case of multicast transmission.

5. Method according to one of the preceding claims,
**characterised in that**
a radio communication device, in particular a mobile communication device, is employed as the subscriber device (UE1).

6. Method according to one of the preceding claims,
**characterised in that**
a UMTS terrestrial radio access network, UTRAN for short, is employed as the radio communication network.

7. Method according to one of the preceding claims,
**characterised in that**
a NodeB of a UMTS mobile radio network is employed as the base station (NodeB1).

8. Method according to claim 2,
**characterised in that**
no user ID (UE-ID) is added to the first information signal (IS1).

9. Method according to claim 3,
**characterised in that**
no user ID (UE-ID) is added to the second information signal (IS2).

10. Method according to one of the preceding claims 8 or 9,
**characterised in that**
a user ID (UE-ID) is added to one of the two information signals (IS1, IS2).

11. Method according to one of the preceding claims,
**characterised in that**
the method is employed in the third generation of mobile radio systems.

12. UMTS radio communication network, having a radio network controller (RNC1) which is connected to at least one base station (NodeB1) of a radio cell,
**characterised in that**
the UMTS radio communication network is implemented in such a way that at least one group message (GM) according to one of method claims 1 to 11 can be transmitted.

13. Subsystem of the UMTS communication network according to claim 12, having at least one subscriber device (UE1) and at least one associated higher-order radio network controller (RNC1) which are implemented to transmit at least one group message (GM) according to one of claims 1 to 11.

14. UMTS communication device (UE1), in particular mobile communication device, which is implemented in such a way that at least one information signal (IS1) in accordance with one of claims 2 to 11 can be transmitted to the higher-order radio network controller (RNC1).

## Revendications

1. Procédé pour un réseau de téléphonie mobile UMTS, destiné à la transmission d'au moins un message de groupe (GM) à au moins un groupe (GR1) d'un ou de plusieurs appareils d'abonnés (UE1) dans au moins une cellule radio (CE1) d'un réseau de radiocommunication UMTS,
la station de base (NodeB1) de chaque cellule radio étant commandée par au moins un contrôleur de réseau radio amont (RNC1),
**caractérisé**
**en ce que** le contrôleur de réseau radio amont (RNC1) vérifie spécifiquement si et/ou combien d'appareils d'abonnés (UE1, UE2) par cellule radio (CE1) sont actuellement abonnés au groupe respectif (GR1), et en ce que le message de groupe (GM) est transmis une seule fois au groupe (GR1) dans la cellule radio (CE1) au moyen d'une transmission en multidiffusion.

2. Procédé selon la revendication 1,
**caractérisé**
**en ce que** l'appareil d'abonné respectif (UE1), via l'interface radio (LS1) de la station de base (NodeB1) de sa cellule radio de séjour (CE1) du moment, transmet au contrôleur de réseau radio amont (RNC1) au moins un premier signal d'information (IS1), lui indiquant si l'appareil d'abonné (UE1) est actuellement abonné au groupe respectif (GR1).

3. Procédé selon l'une des revendications précédentes,
**caractérisé**
**en ce que** l'appareil d'abonné respectif (UE1), via l'interface radio (LS1) de la station de base (NodeB1) de sa cellule radio de séjour (CE1) du moment, transmet au contrôleur de réseau radio amont (RNC1) au moins un second signal d'information (IS2), lui indiquant si l'appareil d'abonné (UE1) se désabonne du groupe respectif (GR1), quitte sa cellule radio de séjour (CE1) et/ou se déconnecte.

4. Procédé selon l'une des revendications 2 ou 3,
**caractérisé**
**en ce que** le signal d'information (IS1, IS2) est généré lors de la transmission en multidiffusion par UMTS (Universal Mobile Telecommunication Service).

5. Procédé selon l'une des revendications précédentes,
**caractérisé**
**en ce que** l'on utilise comme appareil d'abonné (UE1) un appareil de radiocommunication, en particulier un appareil de téléphonie mobile.

6. Procédé selon l'une des revendications précédentes,
**caractérisé**
**en ce que** l'on utilise comme réseau de radiocommunication un UMTS Terrestrial Radio Access Network, appelé UTRAN.

7. Procédé selon l'une des revendications précédentes,
**caractérisé**
**en ce que** l'on utilise comme station de base (NodeB1) un NodeB d'un réseau de téléphonie mobile UMTS.

8. Procédé selon la revendication 2,
**caractérisé**
**en ce que** l'on n'ajoute pas d'ID d'abonné (UE-ID) au premier signal d'information (IS1).

9. Procédé selon la revendication 3,
**caractérisé**
**en ce que** l'on n'ajoute pas d'ID d'abonné (UE-ID) au second signal d'information (IS2).

10. Procédé selon l'une des revendications précédentes 8 ou 9,
**caractérisé**
**en ce que** l'on ajoute un ID d'abonné (UE-ID) à l'un des deux signaux d'information (IS1, IS2).

11. Procédé selon l'une des revendications précédentes,
**caractérisé**
**en ce que** l'on utilise le procédé pour la troisième génération de systèmes de téléphonie mobile.

12. Réseau de radiocommunication UMTS, comprenant un contrôleur de réseau radio (RNC1) qui est relié à au moins une station de base (NodeB1) d'une cellule radio,
**caractérisé**
**en ce que** le réseau de radiocommunication UMTS est adapté pour permettre la transmission d'au moins un message de groupe (GM) selon l'une des revendications 1 à 11 du procédé.

13. Sous-système du réseau de radiocommunication UMTS selon la revendication 12, qui comprend au moins un appareil d'abonné (UE1) et au moins un contrôleur de réseau radio amont (RNC1) associé, qui sont adaptés pour la transmission d'au moins un message de groupe (GM) selon l'une des revendications 1 à 11.

14. Appareil de radiocommunication UMTS (UE1), en particulier appareil de téléphonie mobile, qui est adapté pour permettre la transmission d'au moins un signal d'information (IS1) selon l'une des revendications 2 à 11 au contrôleur de réseau radio amont (RNC1).
